# EUROPEAN PATENT APPLICATION

(11) **EP 4 589 730 A1**
(43) Date of publication of application: **23.07.2025**
(21) Application number: 24152810.8
(22) Date of filing: 19.01.2024
(51) Int. Cl.: H01M 10/613, H01M 10/6557, H01M 50/213

(54) **BATTERY MODULE AND METHOD FOR ITS PRODUCTION**

(71) Applicant: Rimac Technology LLC, 10431 Sveta Nedelja (HR)
(72) Inventor: Padovan, Dominik, 5000 Nova Gorica (SI)
(74) Representative: Grassi, Stefano

(57) **Abstract**

A battery module (1) comprises a frame (2) comprising in turn a plurality of lateral walls (2a) defining a containment volume. At least one battery cell (3) is positioned inside the containment volume and a plurality of distinct and independent cooling conduits (4) develop inside of it in thermal contact with the battery cell (3). A single strip (5) made of an electrically conductive material connects together all the cooling conduits (4) and is further configured to be connected to an electrically conductive element (E).

## Description

### Technical field

The present invention pertains to the technical field of industrial devices and methods, in particular for the production of battery modules.

The battery modules thus produced can be advantageously implemented in a variety of fields, among which of particular interest is the automotive field.

### Background art

In many applications, it is known to implement batteries comprising a plurality of interconnected cells that are inserted in a common housing.

The use and presence of batteries implies the presence of static electricity that may accumulate in the element in contact, or generally speaking coupled, to the batteries.

To avoid unwanted discharges that could prove harmful both for the system implementing the batteries and for a user that may come in contact with the same, it is known to provide a grounding that allows the safe discharge of said accumulated electric charges and make the overall system safer to use.

In particular, the batteries need to be thermoregulated and the metallic cooling conduits (henceforth simply indicated as cooling conduits) that allow to do so are particularly sensible to this problem.

Nowadays, it is known to connect said cooling conduit to a grounding so as to allow the safe discharge of unwanted static electricity without the risk of damaging the batteries themselves.

The known technique requires for example to wire each conduit independently to a grounding, thus proving to be extremely inefficient and not completely suitable for serial production.

Alternatively it is also known to cover the exposed portions of the cooling conduits with a plastic coating so as to insulate them or to assemble the cooling conduits from more parts and make the exposed parts out of plastic.

However, this second solution increases the overall cost of the system, e.g. because it requires more production tools and additional assembling steps, and also does not really solve the problem of static electricity accumulating inside the conduits.

Thus it is evident that in the field there is a strong felt need for innovative solution that could allow an efficient and reliable grounding for the cooling conduits.

### Summary of the invention

In this context, the technical purpose which forms the basis of the present invention is to provide a battery module and a way of producing the same which overcome at least some of the above-mentioned drawbacks of the prior art.

In particular, the aim of the invention is to provide a battery module and a method for its production with an increased efficiency, easiness of implementation and security deriving from a simplification of the overall structure of the device.

The technical purpose indicated, and the aims specified, are substantially achieved by a battery module and a method for its production comprising the technical features described in one or more of the appended claims.

In particular, the invention describes a battery module.

Said battery module may be advantageously implemented in the automotive field. Structurally, the battery module comprises a frame, at least one battery cell, a plurality of cooling conduits and a single strip of conductive material.

The frame comprises in turn a plurality of lateral wall concurring to define a containment volume.

Said containment volume is configured to lodge at least partially the other components (each or only some) of the module.

In particular, the at least one battery cell is positioned inside the containment volume.

The cooling conduits are in detail a plurality of independent and distinct cooling conduits. Said cooling conduits develop inside the containment volume in thermal contact with the at least one battery cell.

The cooling conduits define respective circuits for a cooling fluid.

The strip electrically connects together all the cooling conduits.

The strip is further configured to be connected to an electrically conductive element. Advantageously, said module addresses the problem of the know devices by providing a simple and efficient structure that allows for an easier grounding of the cooling conduits. The present invention further pertains a method for the production of a battery module. The method is performed by preparing a frame comprising a plurality of lateral walls defining a containment volume and a strip made of an electrically conductive material.

At least one battery cell and a plurality of independent and distinct cooling conduits are inserted inside the containment volume so as to have the cell and the conduits in thermal contact.

A first terminal portion of the strip is coupled with each cooling conduit, while a second terminal portion of the strip is connectable with an electrically conductive element. Advantageously the above method simplifies the production of the module by introducing the preparation of a single strip that grounds at the same time all the cooling conduits, simplifying a serial production of the module.

### Brief description of drawings

Further features and advantages of this invention are more apparent in the detailed description below, with reference to preferred, non-restricting, embodiment of the invention as illustrated in the accompanying drawings, in which:
- figure 1 shows a battery module according to the present invention;
- figure 2 shows a possible embodiment of one of the components of the module;
- figure 3 show a detail of a possible embodiment for the connection of two of the main components of the battery module;
- figures 4A-4D respectively show a detail of possible embodiments of the invention.

### Detailed description of preferred embodiments of the invention

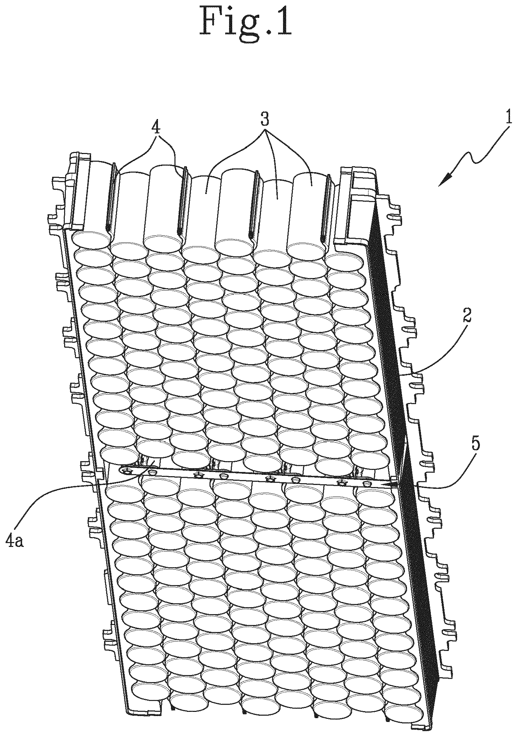

The present invention concerns a battery module 1, of which an overview is presented in figure 1.

For example, said module 1 could be advantageously implemented in a vehicle to provide electrical energy to an electric motor.

From a structural point of view, said module 1 essentially comprises a frame 2, at least one battery cell 3, a plurality of distinct and independent cooling conduits 4 and a single strip 5 of conductive material.

The frame 2 comprises in turn a plurality of lateral walls 2a that concur to define a containment volume inside of which are lodged (at least partially) the other components of the module 1.

Said plurality of walls 2a may completely encircle the other components of the module 1 and/or the frame may further comprise an upper/lower wall configured to define a top/bottom side of the module 1.

In general, the frame 2 presents a structure and shape that delimits a volume inside of which at least the battery cell 3 and the cooling conduit 4 can be at least partially housed.

Said at least one battery cell 3 is thus positioned inside the containment volume and preferably, the plurality of walls 2a are shaped, particularly in their internal side (it is to say the side facing the containment volume), to help positioning and keeping in position at least one battery cell 3.

Preferably, the module 1 comprises a plurality of battery cells 3 that are all lodged inside the containment volume.

The cooling conduits 4 are configured to thermoregulate the battery cell 3 and to this end they develop inside the containment volume in thermal contact with the battery cell 3. Each cooling conduit 4 defines respective circuit for a cooling fluid and is independent and distinct from each other cooling conduit 4 of the module 1.

It is to say that the module comprises a plurality of distinct cooling conduit 4 each of which requires to be grounded so as to avoid the unwanted accumulation of static electricity.

Advantageously, the single strip 5 of conductive material (meaning that the strip 5 is made of an electrically conductive material, such as a metallic material) is coupled to each and every cooling conduit 4 so as to connect them together and is further configured to be connected to an electrically conductive element E, which in turn provides the grounding to the cooling conduits 4.

It is to say that the cooling conduit 4 can be ground by being connected to an electrically conductive element E by way of the strip 5.

By way of a non-limiting example, the electrically conductive element E may be or may comprise a further component of the module 1 (as will be discussed more in detail in the following) and/or a component of the device on which the module is installed.

For example, the electrically conductive element E may be an electrically conductive part of a vehicle, e.g. a vehicle chassis or more in general a portion/component of a vehicle frame. In general, the module 1 according to the present invention allows to implement a single component (the strip 5) that directly connects all the cooling conduits 4 with a grounding without the need of introducing expensive covering element or complicated wiring to individually ground each cooling conduit 4.

In particular, the connection between the strip 5 and the cooling conduits 4 may be achieved with a variety of alternative techniques that may comprise, by ways of non-limiting examples, interference fit, welding, screwing.

The specific coupling technique may also be selected based on the position of the cooling conduits 4 inside the containment volume and/or their shape and may be different for different cooling conduits 4 of the same module 1.

Furthermore, according to the geometries of the various components of the module 1, the strip 5 may be positioned and connected to the cooling conduits 4 in different location.

For example, the strip 5 may be coupled to respective portions of the plurality of cooling conduits 4 facing one of the lateral walls 2a of the frame 2.

In this way, the strip 5 ends up being covered and protected by said lateral walls 2a. Alternatively, the strip 5 may be coupled to respective portions of the plurality of cooling conduits 4 facing an upper or bottom side of the frame 2.

In this way, the strip 5 is easily accessible even after the entire module 1 has been assembled and can still be protected by applying the above mentioned upper/lower wall.

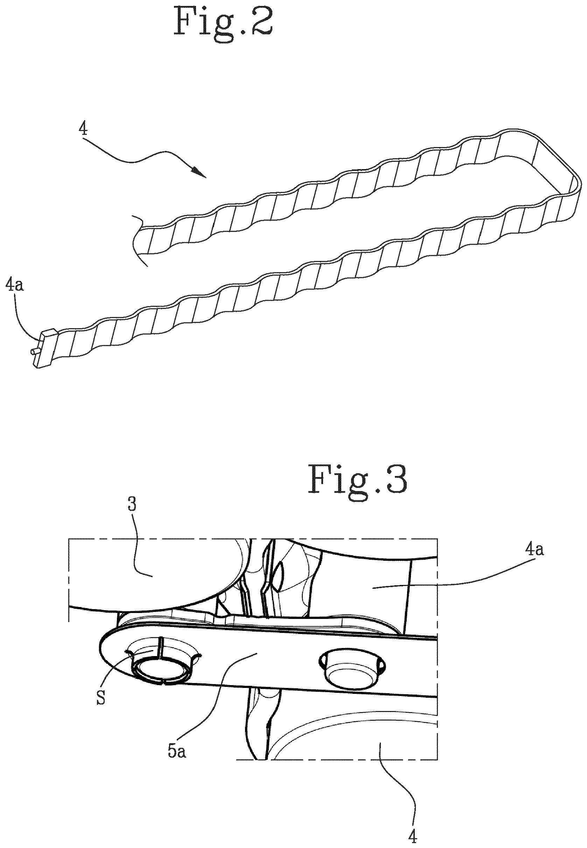

Coming to the possible way of connecting the strip 5 with the cooling conduits 4, according to one possible embodiment of the present invention, each cooling conduit 4 may comprise a wavy cooling plate (also known as snake cooling tube, an example of which is depicted in figure 2 for illustrative purpose, such a tube could be implemented with different sizes and shapes and be for example a straight snake cooling tube) and a manifold 4a which defines an inlet opening I and an outlet opening O for the wavy cooling plate, allowing a cooling fluid to be fed to and then extracted from said wavy cooling plate.

Said manifold 4a may be positioned anywhere on the cooling conduit 4, for example it may be positioned at one end of the cooling conduit as depicted in figure 2 or in the middle of its structure.

Preferably, at least one between the inlet opening I and the outlet opening O extends outside the containment volume so as to make it more accessible and more easily connectable with a coolant feeding line configured to feed and allow the circulation of the cooling fluid.

In this context, the strip 5 may be connected to said manifold 4a, in particular using an interference fit as shown in the detail depicted in figure 3.

Specifically, the strip may present a plurality of seats S (which could be by way of a non-limiting example a through seat as shown in figure 3) and each manifold 4a is coupled by way of interference fit to a respective seat S.

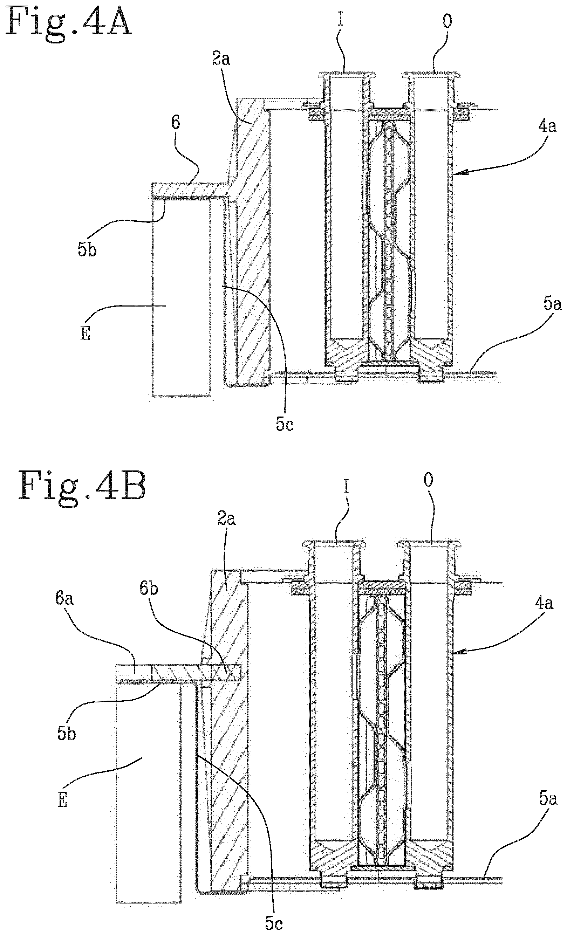

Again as shown for exemplary purposes in figures 3 and 4A-4D, the manifold 4a may present an elongated shape with a first extremity presenting the inlet and outlet openings I, O and the strip 5 may presents a plurality of through seats S that are coupled by way of interference fit with a bottom/lower end (i.e. an end opposite to the one presenting the inlet and outlet opening I, O) of the elongated manifold 4a.

Figures 4A-4D show in more detail respective embodiments of the present invention, which are focused on possible geometries and structures of the frame 2 and of the strip 5.

Generally, meaning according to all the depicted embodiments, the strip 5 presents a first terminal portion 5a, a second terminal portion 5b and a central portion 5c.

The first terminal portion 5a is configured to connect the strip 5 with the cooling conduits 4. The second terminal portion 5b is configured to be coupled/connected to the electrically conductive element E.

The central portion 5c is interposed between the first terminal portion 5a and the second terminal portion 5b connecting them.

It is underlined that the portions 5a, 5b 5c are not necessarily different elements, but they may simply identify different parts of the single strip 5.

According to the embodiment shown in figure 4A and 4B, the central portion 5c of the strip 5 run externally to the frame 2.

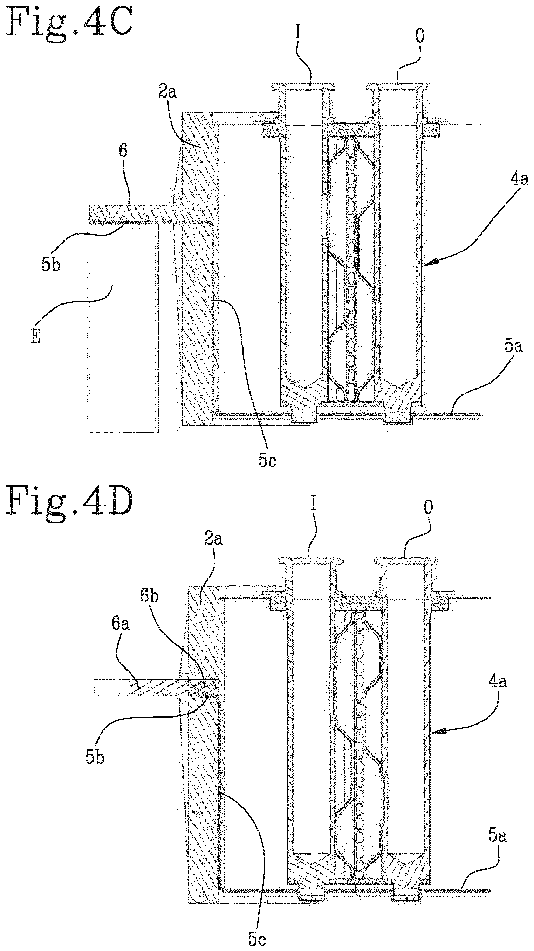

In the embodiments shown in figures 4C and 4D instead the central portion 5c runs inside and is preferably integral with the frame 2, specifically with one of its lateral walls 2a. More in detail, as depicted in figure 4A, the frame 2 comprises an external flange 6 running along and integral with at least a portion of at least one lateral wall 2a.

In this context, the frame 2 and the external flange 6 are made of a plastic material (or generally speaking a material which is not electrically conductive).

Once the module 1 is installed, the terminal portion 5b ends up being clamped between the external flange 6 and the electrically conductive element E so as to be stably coupled to it and to be kept in place.

According to a further embodiment, depicted in detail in figure 4B, the frame comprises the electrically conductive element E and said electrically conductive element E comprises or consist of or is at least partially defined by the external flange 6.

In other words, in this context, the external flange 6 can be made of an electrically conductive material (for example a metallic material) and is coupled to the frame 2, which can instead also in this context be made of a plastic material (generally speaking a non-electrically conductive material).

Specifically the frame 2 may present in one of its lateral wall 2a a seat inside of which the external flange 6 is lodged so that said external flange 6 runs along at least a portion of at least one lateral wall 2a of the frame 2.

Also in this context, the second terminal portion 5b of the strip 5 is connected to the external flange 6 that can in this situation act by itself or concur to define the grounding for the cooling conduits.

Nonetheless, the second terminal portion 5b of the strip 5 may still be clamped between the external flange 6 and a further component that may be a further electrically conductive element E (as depicted in figure 4B) or may simply be any part/component of the device/vehicle on which the module 1 is installed simply meant to improve the stability and protect the strip 5.

According to a possible embodiment, the coupling between the external flange 6 and the frame 2 is achieved by an overmolding process.

It is to say that the frame 2 can be overmolded on the external flange 6 so that said external flange 6 result integral with the frame 2, thus providing a particularly stable/safe/reliable coupling between this two components of the module 1.

Analogously, also when the strip 5 is incorporated in the frame 2, specifically in one of its lateral walls 2a, as depicted in figures 4C and 4D, the coupling between the frame 2 and the strip 5 may be achieved by overmolding the first on the latter.

Specifically, as depicted in figure 4C, the frame 2 may be overmolded on the central portion 5c of the strip 5, so that said strip 5 is strictly and stably coupled to a lateral wall 2a of the frame, with the second terminal portion 5b extending outside it to be coupled with the electrically conductive element E in ways similar and/or corresponding to the ones described above.

It is underlined that mirroring the embodiments shown in figures 4A and 4B, in this context the external flange 6 may be integral with the frame 2 and be made of the same non-electrically conductive material (situation depicted in figure 4C) or the external flange 6 may be itself the electrically conductive element E (situation depicted in figure 4D).

Specifically, according to the embodiment specifically sown in figure 4D, the external flange 6 represents itself the electrically conductive element E (analogously to the above, the electrically conductive element E may comprise, consist of or be at least partially defined by the external flange 6) and the frame is overmolded over also the second terminal portion 5b of the strip 5.

In this context, the frame 2 incorporates the central portion 5c and the second terminal portion 5b of the strip and also at least a portion of the external flange 6 so that a point of contact between the second terminal portion 5b and the external flange 6 is positioned inside a lateral wall 2a of the frame 2.

Specifically, the frame 2 may be overmolded over both the central and second terminal portions 5c, 5b of the strip 5 and the external flange 6.

This solution proves to be particularly stable and allows to cover/protect also the second terminal portion 5b before the installation of the module 1.

Advantageously, irrespective of the specific embodiment that is implemented, the present invention provides a battery module 1 with a particularly simple (from a structural point of view) and efficient grounding that avoids the risk of an unwanted accumulation of static electricity inside the module 1 itself.

The present invention further pertains to a method for the production of a battery module 1, specifically a battery module 1 presenting one or more of the technical features described above.

Operatively, said method is performed by preparing a frame 2 comprising a plurality of lateral wall 2a which concur to define a containment volume.

As per the above, the containment volume provides a space wherein the other components of the module 1 to be produced will be lodged.

Then at least one battery cell 3 and a plurality of cooling conduits 4 are inserted inside the containment volume in such a way that the cooling conduits 4 are in thermal contact with the at least one battery cell 3.

Also, a single strip 5 of electrically conductive material is prepared.

Said strip 5 presents a first terminal portion 5a and second terminal portion 5b, the first terminal portion 5a is coupled with each cooling conduit 4 and the second terminal portion 5b is instead connectable with an electrically conductive element E.

The first terminal portion 5a and the second terminal portion 5b are connected/joined together by a central portion 5c.

The preparation of the frame 2 and of the strip 5, particularly concerning the specific reciprocal arrangement of the two, may be achieved in different ways that will be discussed in the following.

According to a first embodiment, the preparation step of the frame may be performed by preparing a mold and inserting inside of it the strip 5.

The frame 2 is formed by pouring a raw material inside the mold, overmolding the raw material over the central portion 5c of the strip 5, with the second portion 5b of the strip extending outside the mold, or in any case extending outside the frame 2 (specifically outside the containment volume defined by the lateral walls 2a of the frame 2).

The above procedure allows for example the production of a battery module 1 presenting a structure such as the one depicted in figure 4C.

Specifically, in this context, it is possible to prepare a mold that also defines the profile of an external flange 6, so that the molding procedure forms an external flange 6 which is integral with a least a portion of a lateral wall 2a of the frame 2.

In other words, the frame 2 and the external flange are made out of a single piece produce with a same/single molding procedure.

Alternatively, the external flange 6 may be a separate component which is coupled to the frame 2.

Specifically, the claimed method can be performed by preparing an external flange 6 made of an electrically conductive material and positioning the same inside the mold before the frame 2 is formed.

In this context, the strip 5 is also inserted in the mold and specifically coupled to the external flange 6.

In other words, the strip 5 and the external flange 6 are both positioned inside the mold before the frame 2 formed in such a way as to be in direct contact with each other.

Then the raw material is poured inside the mold forming the frame 2 by overmolding said raw material over at least the central portion 5c of the strip 5 and, at the same time, over only an internal portion 6b of the external flange 6, so that said internal portion 6b results to be integral with the frame 2 while at least an external portion 6a of the external flange 6 extends outside the frame 2, i.e. outside the containment volume.

According to a possible embodiment, in the above situation, the second terminal portion 5b of the strip 5 may also extend outside the frame 5 and thus be coupled only or also to the external portion 6a of the external flange 6.

Alternatively, the frame 2 is overmolded not only over the central portion 5c of the strip 5 but also over its second terminal portion 5b so that a point of contact between the strip 5 and the external flange 6 is positioned inside the lateral wall of the frame 2.

In other words, the second terminal portion 5b of the strip is in this situation coupled with the internal portion 6b of the external flange 6 as depicted in figure 4D.

Once the strip 5 and the frame 2 have been prepared according to any of the above-described procedure it is then possible to introduce in the so defined containment volume the at least one battery cell 3 and the cooling conduits 4 and couple the strip 5 to the latter to complete the preparation of the battery module 1.

Advantageously the proposed method is particularly suitable for serial production insofar allows a more simple, efficient, and standardized positioning of component that connects the cooling conduits 4 with their grounding.

In other words, the proposed method standardized the installation procedure and the positioning of the strip 5, which represents a single component that could ground all the cooling conduits at the same time, avoiding the expensive and complex necessity to ground/insulate all of them individually in a customized way.

Furthermore, once the strip 5 is installed, the same can also help defining a reference point for the insertion of further components.

For example, when the manifold 4a of the cooling conduits 4 are to be coupled to the strip 5 by way of interference fit with its seats S, the latter can help guiding the overall positioning of the cooling conduits 4 and their insertion into the containment volume.

In general, the strip 5 may present geometric/structural features (such as the seats S, protrusions, recesses, portions of its profile,...) shaped so as to help guiding in position further components of the battery module 1 when they are installed or inserted into the containment volume or generally speaking when they are coupled to another component of the module 1.

## Claims

1. A battery module (1) comprising:
- a frame (2) comprising a plurality of lateral walls (2a) defining a containment volume;
- at least one battery cell (3) positioned inside the containment volume;
- a plurality of distinct and independent cooling conduits (4) developing inside the containment volume in thermal contact with said at least one battery cell (3), said plurality of cooling conduits (4) defining respective circuits for a cooling fluid;
- a single strip (5) made of an electrically conductive material, said strip (5) electrically connecting together all the cooling conduits (4) and being configured to be connected to an electrically conductive element (E).

2. Module according to claim 1, wherein each cooling conduit (4) comprises a wavy cooling plate and a manifold (4a) defining an inlet opening (I) and an outlet opening (O) for the wavy cooling plate, said strip (5) being coupled to the manifold (4a).

3. Module according to claim 1 or 2, wherein the strip (5) is connected to each cooling conduit (4) by way of any one between: interference fit, welding, screwing.

4. Module according to claims 2 and 3, wherein the strip (5) presents a plurality of seats (S), each manifold (4a) being coupled by way of interference fit to a respective seat.

5. Module according to any of the preceding claims, wherein the strip (5) presents a first terminal portion (5a) coupled with the cooling conduits (4), a second terminal portion (5b) configured to couple the strip (5) with the electrically conductive element (E) and a central portion (5c) connecting the first and second terminal portions (5a, 5b).

6. Module according to claim 5, wherein the frame (2) comprises an external flange (6) running along and integral with at least a portion of at least one lateral wall (2a), said frame (2) and said external flange (6) being made of a plastic material.

7. Module according to claim 5 or 6, wherein the frame (2) is overmolded on the central portion (5c) of the strip (5).

8. Module according to claim 5, wherein the frame (2) comprises the electrically conductive element (E), said electrically conductive element (E) comprising an external flange (6) running along at least a portion of at least one lateral wall (2a) said external flange (6) being connected to the second terminal portion (5b).

9. Module according to claim 8, wherein the frame (2) is overmolded over at least the central portion (5c) of the strip (5) and over a portion of the external flange (6).

10. Module according to claim 9, wherein the frame (2) is overmolded over the central portion and second terminal portion (5c, 5b) of the strip (5) and over an internal portion (6b) of the external flange (6) so that a point of contact between the strip (5) and the external flange (6) is positioned inside a lateral wall (2a) of the frame (2).

11. Module according to any of the preceding claims, wherein the strip (5) is coupled to respective portions of the plurality of cooling conduits (4) facing one of the lateral walls (2a) of the frame (2).

12. Module according to any of the preceding claims 1 to 5, wherein the strip (5) is coupled to respective portions of the plurality of cooling conduits (4) facing an upper or bottom side of the frame (2).

13. Method for the production of a battery module (1) comprising the steps of:
- preparing a frame (2) comprising a plurality of lateral walls (2a) defining a containment volume;
- preparing a strip (5) made of an electrically conductive material;
- inserting at least one battery cell (3) inside the containment volume;
- inserting a plurality of distinct and independent cooling conduits (4) inside the containment volume and in thermal contact with the battery cell (3);
- coupling a first terminal portion (5a) of the strip (5) with each cooling conduit (4), a second terminal portion (5b) of the strip (5) being connectable with an electrically conductive element (E).

14. Method according to claim 13, wherein the step of preparing a frame (2) is performed by:
- preparing a mold,
- inserting the strip (5) in the mold;
- forming the frame (2) by pouring a raw material inside the mold overmolding said raw material over a central portion (5c) of said strip (5), the second terminal portion (5b) of the strip (5) extending outside the frame (2).

15. Method according to claims 13, wherein the step of preparing a frame (2) is performed by:
- preparing a mold;
- preparing an external flange (6) made of an electrically conductive material and positioning said external flange (6) inside the mold;
- inserting the strip (5) in the mold and positioning a second terminal portion (5b) of said strip (5) in contact with the external flange (6);
- forming the frame (2) by pouring a raw material inside the mold overmolding said raw material over at least a central portion (5c) of said strip (5) and over only an internal portion (6b) of the external flange (6) so that an external portion (6a) of the external flange (6) extends outside the containment volume.

16. Method according to claim 15, wherein the frame (2) is overmolded over a central portion (5c) and over the second terminal portion (5b) of the strip (5) and the second terminal portion (5b) is coupled to the internal portion (6b) of the external flange (6) so that a point of contact between the strip (5) and the external flange (6) is positioned inside the lateral wall (2a) of the frame (2).
